# EUROPÄISCHE PATENTANMELDUNG

(11) **EP 4 246 025 A2**
(43) Veröffentlichungstag der Anmeldung: **20.09.2023**
(21) Anmeldenummer: 23191264.3
(22) Anmeldetag: 12.03.2022
(51) Int. Cl.: F16K 27/02

(54) **SINGLE-USE VENTILBLOCKKÖRPER**

(30) Priorität: 07.06.2021 DE 102021114567
(62) Teilanmeldung aus: 22161745.9
(71) Anmelder: Gemü Gebr. Müller Apparatebau GmbH & Co. Kommanditgesellschaft, 74653 Ingelfingen (DE)
(72) Erfinder: ROOS, Robin, 6343 ROTKREUZ (CH); STEIGERT, Jochen, 6030 EBIKON (CH)
(74) Vertreter: DREISS Patentanwälte PartG mbB

(57) **Zusammenfassung**

Es wird ein Ventilblockkörper (100) zur Anordnung an einem Antriebsträger (200) bereitgestellt, der umfasst: Eine Mehrzahl von Prozessfluidkanälen (102, 104a-d), zwischen denen Ventilsitze angeordnet sind; eine Mehrzahl von den Ventilsitzen zugeordneten Antriebs-Anschlussabschnitten (110a-d), welche auf wenigstens einer Seite (112) des Ventilblockkörpers (100) angeordnet sind; und
eine Mehrzahl von Spannabschnitten (120a-d), welche von der wenigstens einen Seite (112) des Ventilblockkörpers (100) abgewandt angeordnet sind.

## Beschreibung

Die Erfindung betrifft Fortschritte im Bereich der Ventilblockkörper, insbesondere zur Single-Use-Verwendung.

US 5 139 225 A offenbart ein pneumatisch gesteuertes 3-Wege-Ventilsystem, das einen Ventilkörper aufweist, der aus Modulen aus Polyvinylidenfluoridpolymer (PVDF) aufgebaut ist, die abnehmbar und funktionsfähig so aneinander befestigt sind, dass sie eine Doppelmembran-Gleitventilspindelanordnung bekannter Bauart abnehmbar enthalten und halten. Der Betrieb des Ventils wird pneumatisch über speziell konstruierte, abnehmbar angebrachte Gaseinlass- und -auslassöffnungen mit Öffnungen von vorgewählter Länge und Innendurchmesser gesteuert, die so ausgelegt sind, dass sie die Einleitungsrate des Druckgases, das die Ventilschaftbaugruppe antreibt, durch die Auslenkung der oberen und unteren Membranen der Ventilschaftbaugruppe beeinflussen.

US 2018/274689 A1 offenbart eine Ventilbaugruppe mit einem multidirektionalen Durchflussweg, welche einen Ventilkörper umfasst, der entsprechende schwenkbare Abschnitte aufweist, die entsprechende Durchgänge definieren, die sich in einem geschlossenen Zustand durch den Ventilkörper erstrecken. Eine flexible Leitung oder ein Schlauch mit einem Schleifenabschnitt und einer Vielzahl von Abzweigungen, die sich von dem Schleifenabschnitt erstrecken, ist zumindest teilweise innerhalb des Ventilkörpers angeordnet. Teile der Schleife, die sich über den Ventilkörper hinaus erstrecken, sind durch entsprechende starre Ummantelungen gekapselt. Mehrere Ventile befinden sich auf dem Ventilkörper und werden verwendet, um den Schleifenabschnitt selektiv in verschiedenen Quetschkonfigurationen zu quetschen, um Fluid zu oder von den bestimmten Zweigen zu leiten. Die Ventilbaugruppe kann in einen Fertigungs- oder anderen Produktionsprozess integriert werden, wobei optional zusätzliche Ummantelungen verwendet werden können, um die flexiblen Leitungszweige einzukapseln.

US 2002/043288 A1 offenbart eine Vorrichtung, welche dazu dient, ein gasförmiges Medium, insbesondere Luft, mittels einer Vielzahl von Dosierventilen in eine Vielzahl von Komponenten eines Brennstoffzellensystems eines Kraftfahrzeugs zu dosieren. Alle Dosierventile sind an einem zentralen Mittelblock angeordnet. Der zentrale Mittelblock weist mindestens eine Einlassöffnung für das gasförmige Medium auf, die über mindestens einen Durchlass mit jeweils einer Anschlussstelle für jedes der Dosierventile verbunden ist.

Die Probleme des Standes der Technik werden durch einen Ventilblockkörper gemäß dem Anspruch 1 gelöst.

Ein erster Aspekt der Beschreibung betrifft einen Ventilblockkörper zur Anordnung an einem Antriebsträger. Der Ventilblockkörper umfasst: Eine Mehrzahl von Prozessfluidkanälen, zwischen denen Ventilsitze angeordnet sind; eine Mehrzahl von den Ventilsitzen zugeordneten Antriebs-Anschlussabschnitten, welche auf wenigstens einer Seite des Ventilblockkörpers angeordnet sind; und eine Mehrzahl von Spannabschnitten, welche von der wenigstens einen Seite des Ventilblockkörpers abgewandt angeordnet sind.

Vorteilhaft ist dieser Ventilkörper dazu geeignet, schnell und sicher, also fehlerfrei mit einem Antriebsträger verbunden und von diesem entkoppelt zu werden. Die fehlerfreie Verriegelung von Single-Use Ventilkörpern mit den Antrieben wird dadurch ermöglicht. So ist eine Wiederverwendung von Antrieben im Single-Use-Bereich möglich. Im Vergleich mit anderen Systemen umfassend mehrere separate Ventileinheiten wie beispielsweise bei Schlauchquetschventilen werden Kosten und der benötigte Bauraum reduziert.

Ein vorteilhaftes Beispiel zeichnet sich dadurch aus, dass eine Mehrzahl von parallel zu einer Anordnungsachse verlaufenden Formschlussabschnitten vorgesehen sind.

Vorteilhaft definieren die Formschlussabschnitte die Anordnung des Ventilblockkörpers an dem Antriebsträger. Insbesondere werden durch die Formschlussabschnitte die Antriebs-Anschlussabschnitte zu den Antrieben präzise positioniert.

Ein vorteilhaftes Beispiel zeichnet sich dadurch aus, dass die Anordnungsachse lotrecht zu wenigstens einer Oberfläche auf der wenigstens einen Seite des Ventilblockkörpers, insbesondere lotrecht zu wenigstens einem der Antriebs-Anschlussabschnitte, insbesondere lotrecht zu einer gedachten Ebene durch einen Rand wenigstens eines Antriebs-Anschlussabschnitts, verläuft.

Durch diese axiale Führung des Ventilblockkörpers wird die Positionierung von Antriebsträger und Ventilblockkörper zueinander verbessert.

Ein vorteilhaftes Beispiel zeichnet sich dadurch aus, dass wenigstens einer der Antriebs-Anschlussabschnitte eine Membran umfasst, die in ihrem lateralen Bereich zumindest abschnittsweise mit dem Ventilblockkörper verbunden ist.

Vorteilhaft existiert damit eine Art Vorverbindung der Membran mit dem Ventilblockkörper und vereinfacht eine Montage, da eine separate Positionierung mehrerer Membrane entfällt. Fehlmontagen der Membran werden dadurch reduziert.

Ein vorteilhaftes Beispiel zeichnet sich dadurch aus, dass wenigstens ein Koppelabschnitt von der Membran, insbesondere parallel zur Anordnungsachse, abragt.

Insbesondere wenn der Koppelabschnitt parallel zur Anordnungsachse abragt ergeben sich Vorteile bei der lösbaren Verbindung der Membran mit dem Antrieb.

Ein zweiter Aspekt der Beschreibung ist auf eine Vorrichtung zur Anordnung des Ventilblockkörpers an dem Antriebsträger gerichtet. Die Vorrichtung umfasst den Ventilblockkörper gemäß dem ersten Aspekt. Weitergehend umfasst die Vorrichtung den Antriebsträger, an welchem eine Mehrzahl von Ventilantrieben angeordnet sind, wobei in einem ersten Zustand eine Mehrzahl von sich an dem Antriebsträger abstützenden, beweglichen Spannelementen einen Montageraum zur Anordnung des Ventilblockkörpers an dem Antriebsträger freigeben, und wobei in einem zweiten Zustand die Mehrzahl der Spannelemente die zugeordneten Spannabschnitte des Ventilkörpers eingreifen und den Ventilblockkörper zwischen der Mehrzahl von Spannelementen und dem Antriebsträger verspannen.

Montage sowie Demontage als auch die Kopplungsgenauigkeit zwischen Ventilblockkörper und Antriebsträger werden durch die Vorrichtung verbessert.

Ein vorteilhaftes Beispiel zeichnet sich dadurch aus, dass eine Mehrzahl von Formschlusselementen von dem Antriebsträger abragen, dass die Mehrzahl von Formschlusselementen in dem ersten Zustand den Montageraum für den Ventilblockkörper zumindest abschnittsweise begrenzen, und dass in die Mehrzahl von Formschlusselementen in dem zweiten Zustand in die Formschlussabschnitte des Ventilblockkörpers eingreifen.

Vorteilhaft wird durch den Formschluss die Bewegungsfreiheit von Ventilblockkörper und Antriebsträger eingeschränkt, was die Positionierung der beiden Komponenten zueinander verbessert und damit die Positionierungsgenauigkeit der Antriebs-Anschlussabschnitte zu den Antrieben verbessert.

Ein vorteilhaftes Beispiel zeichnet sich dadurch aus, dass in dem ersten Zustand die Mehrzahl von Spannelementen sich zumindest in einem dem Ventilkörper zugewandten Bereich innerhalb einer gedachten parallel zur Anordnungsachse verlaufenden Verlängerung des zugeordneten Formschlusselements befinden.

Vorteilhaft kann damit eine kompakte Vorrichtung bereitgestellt werden. Gleichzeitig wird in dem ersten Zustand die Zuführung in den Montageraum zur Anordnung des Ventilblockkörpers ermöglicht.

Ein vorteilhaftes Beispiel zeichnet sich dadurch aus, dass die Vorrichtung wenigstens einen manuellen, pneumatischen oder motorischen Spannantrieb zur Bewegung wenigstens eines oder der Mehrzahl der Spannelemente umfasst, wobei der Spannantrieb sich an dem Antriebsträger abstützt.

Vorteilhaft kann durch den Antrieb und ein zwischen dem Antrieb und den Spannelementen angeordnetes Getriebe eine geordnete Bewegung der Spannelemente erreicht und eine wiederholbare Klemmung des Ventilblockkörpers erfolgen.

Ein vorteilhaftes Beispiel zeichnet sich dadurch aus, dass die Mehrzahl der Spannelemente über einen gemeinsamen Steuerträger miteinander gekoppelt sind, und dass der mindestens eine Spannantrieb sein Antriebsmoment in den Steuerträger einleitet.

Vorteilhaft können über den Steuerträger die Spannabschnitte gemeinsam bewegt werden. Darüber hinaus kann die Anzahl der Spannantriebe verringert werden.

Ein vorteilhaftes Beispiel zeichnet sich dadurch aus, dass der Antriebsträger zwischen dem Steuerträger auf der einen Seite und dem wenigstens einen Spannantrieb sowie den Spannelementen auf der anderen Seite angeordnet ist.

Insbesondere bei einem manuellen Handantrieb ist die Montage des Ventilblockkörpers für den Monteur einfacher überprüfbar, da Betätigung und Spannung auf der Seite des Montageraums des Antriebsträgers stattfinden.

Ein vorteilhaftes Beispiel zeichnet sich dadurch aus, dass eine entlang ihrer Längsachse beweglich gelagerte Betätigungsstange über ein Drehgelenk mit dem zugeordneten der Mehrzahl von Spannelementen verbunden ist, wobei ein zu dem Antriebsträger feststehend angeordnetes Element in ein Langloch des zugeordneten Spannelements eingreift.

Damit wird ein kompaktes Spannelement bereitgestellt, welches in dem ersten Zustand den Aufnahmeraum zur Anordnung des Ventilblockkörpers freigibt. In dem zweiten Zustand wird durch eine in die Betätigungsstange eingebrachte Zugkraft die Klemmkraft in den Ventilblockkörper eingeleitet.

Ein vorteilhaftes Beispiel zeichnet sich dadurch aus, dass das Langloch sich in Richtung eines Kontaktabschnitts des zugeordneten Spannelements, der zum Eingriff in den zugeordneten Spannabschnitt des Ventilblockköpers eingerichtet ist, verjüngt.

Vorteilhaft kann das jeweilige Spannelement aus dem ersten Zustand in den zweiten Zustand überführt werden. Insbesondere die vom Kontaktabschnitt wegweisende Aufweitung des Langlochs erlaubt im ersten Zustand zum einen eine kompakte Anordnung. Zum anderen zwingt die Aufweitung bzw. Verjüngung das Spannelement in die Kippbewegung.

Ein vorteilhaftes Beispiel zeichnet sich dadurch aus, dass ein jeweiliger mit einer entlang einer Stellachse beweglichen Ventilstange starr verbundener Adapter der Mehrzahl von Ventilantrieben in dem ersten Zustand einen Montageraum zur Anordnung eines zugeordneten Koppelabschnitts, insbesondere einer Membran, freigibt, und wobei der jeweilige Adapter nach Erreichen des zweiten Zustands den zugeordneten Koppelabschnitt zu der Antriebsstange festlegt.

Vorteilhaft ermöglichen die Adapter eine einfache Anordnung des Ventilblockkörpers.

Ein vorteilhaftes Beispiel zeichnet sich dadurch aus, dass ein jeweiliger der Ventilantriebe umfasst: einen Zwischenkörper mit Steuerabschnitten, welche innerhalb einer Durchgangsöffnung des Zwischenkörpers feststehend angeordnet sind; und den wenigstens abschnittsweise innerhalb der Durchgangsöffnung beweglich angeordneten Adapter mit zwei Adapterelementen, welche um eine lotrecht zu der Stellachse verlaufende Rotationsachse drehbar zu dem Adapter festgelegt sind, wobei ein jeweiliger Kontaktabschnitt des jeweiligen Adapterelements in einer ersten Position des Adapters auf der Stellachse, die in dem ersten Zustand eingenommen wird, den zugeordneten Steuerabschnitt derart kontaktiert, sodass das jeweilige Adapterelement um die Rotationsachse in eine Montageposition gedreht ist, in welcher Verbindungskonturen der Adapterelemente einen Montageraum, der größer als ein Aufnahmeraum ist, begrenzen, wobei die der Stellachse zugewandten Verbindungskonturen der Adapterelemente in einer zweiten Position des Adapters, der nach Erreichen des zweiten Zustands eingenommen wird, auf der Stellachse den gemeinsamen Aufnahmeraum zur Aufnahme und Festlegung des Koppelabschnitts zur zugeordneten Ventilstange begrenzen.

Vorteilhaft wird der Koppelabschnitt der jeweiligen Ventilmembran durch einfaches Verfahren d.h. Bewegen der Ventilstange festgelegt. Das bedeutet, dass eine einfache Ansteuerung der Ventilantriebe genügt und weitere manuell durchzuführende Schritte zur Festlegung des Koppelabschnitts entfallen.

In der Zeichnung zeigen:
- Figur 1: eine perspektivische Ansicht eines beispielhaften Ventilblockkörpers;
- Figuren 2a und 2b: in schematischer Schnittansicht eine Vorrichtung zur Anordnung des Ventilblockkörpers an einem Antriebsträger in einem jeweiligen Zustand;
- Figuren 3a und 3b: in einer perspektivischen Ansicht die Vorrichtung in dem jeweiligen Zustand;
- Figuren 4a und 4b: in einer Schnittansicht die Vorrichtung in dem jeweiligen Zustand;
- Figur 5: die Vorrichtung in einem Längsschnitt;
- Figur 6: zeigt ein weiteres Beispiel für den Ventilblockkörper; und
- Figuren 7a und 7b: in einer perspektivischen Detailansicht die Vorrichtung in einer alternativen Ausprägung.

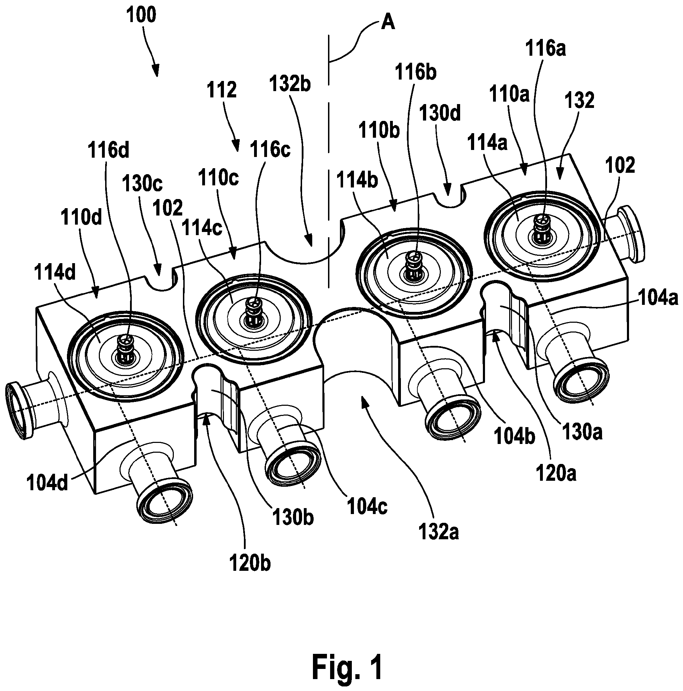

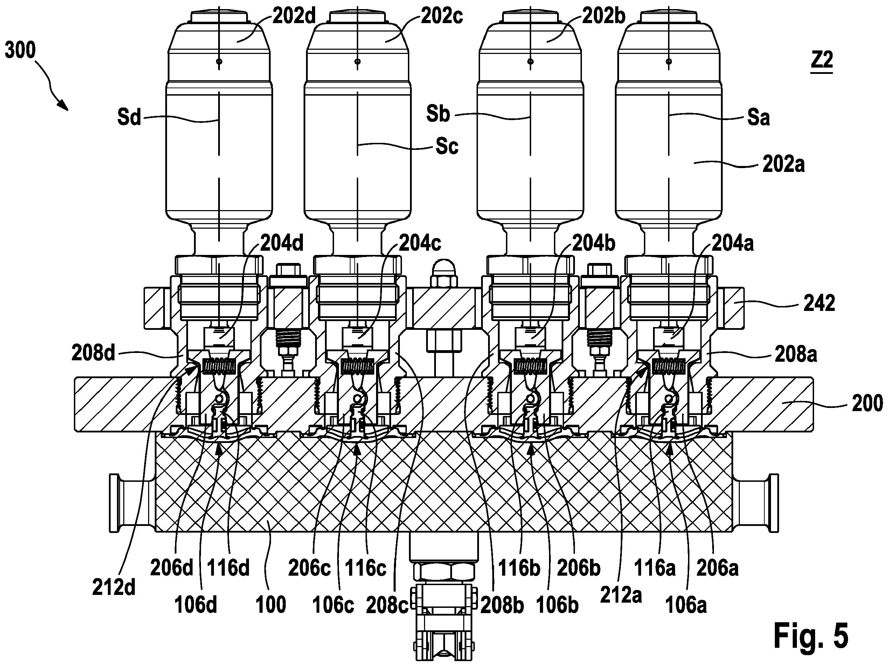

Figur 1 zeigt in perspektivischer Ansicht einen einstückigen Kunststoff-Ventilblockkörper 100. Dieser ist zur Anordnung an einem Antriebsträger ausgebildet. Eine Mehrzahl von Prozessfluidkanälen 102, 104a-d sind innerhalb des Ventilblockkörpers 100 angeordnet, zwischen denen in Figur 5 dargestellte Ventilsitze 106a-d angeordnet sind. Wenigstens ein Teil der Prozessfluidkanäle 102, 104a-d endet in äußeren Anschlüssen.

Eine Mehrzahl von den Ventilsitzen 106a-d zugeordneten Antriebs-Anschlussabschnitten 110a-d sind auf wenigstens einer Seite 112 des Ventilblockkörpers 100 angeordnet. Die Antriebs-Anschlussabschnitte 110a-d umfassen eine jeweilige Membran 114a-d, die in ihrem lateralen Bereich zumindest abschnittsweise mit dem Ventilblockkörper 100 verbunden ist.
Beispielsweise ist die jeweilige Membran 114a-d im lateralen Bereich mit dem Ventilblockkörper 100 verschweißt und überdeckt damit den zugeordneten Ventilsitz 106a-d. Ein jeweiliger Koppelabschnitt 116a-d, beispielsweise in Form eines Membranpins, ragt, insbesondere parallel zur Anordnungsachse A, von der Membran 114a-d nach außen ab.

Eine Mehrzahl von Spannabschnitten 120a-d sind von der wenigstens einen Seite 112 des Ventilblockkörpers 100 abgewandt angeordnet und umfasst vorliegend Oberflächen, die von der Seite 112 wegweisen.

Eine Mehrzahl von parallel zu einer Anordnungsachse A verlaufenden Formschlussabschnitten 130a-d sind als laterale Ausnehmungen ausgebildet. In nicht dargestellter Form sind Formschlussabschnitte nicht lateral, sondern innerhalb des Ventilblockkörpers 100 angeordnet. Vorliegend sind die Formschlussabschnitt 130a-d lateral am Ventilblockkörper 100 angeordnet und folgen in einem proximalen Bereich einer Zylindermantelfläche.

Weitere laterale Ausnehmungen 132a-b nehmen Elemente von Spannantrieben 240a-b ohne direkte Kontaktierung zumindest teilweise auf, was den Bauraum der Vorrichtung 300 verkleinert.

Die Anordnungsachse A verläuft lotrecht zu wenigstens einer Oberfläche 132 auf der wenigstens einen Seite des Ventilblockkörpers 100, insbesondere lotrecht zu wenigstens einem der Antriebs-Anschlussabschnitte 110a-d, insbesondere lotrecht zu einer gedachten Ebene durch einen Rand wenigstens eines Antriebs-Anschlussabschnitts 110a-d.

Der Ventilblockkörper 100 ist beispielsweise aus PP (Polypropylen), PE (Polyethylen), PSU (Polysulfon), PEEK (Polyetheretherketon) hergestellt. Die Membranen 114a-d sind beispielsweise aus einem TPE (Thermoplastisches Elastomer), EPDM (Ethylen-Propylen-Dien-Kautschuk), NBR (Acrylnitril-Butadien-Kautschuk) oder Silikon hergestellt.

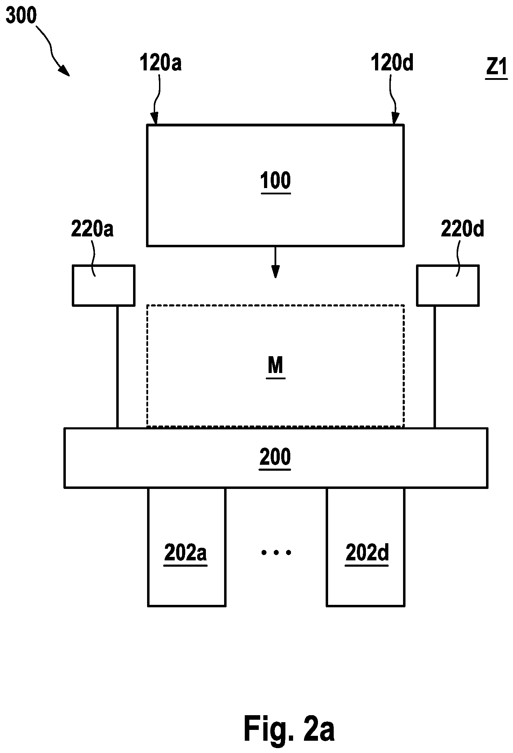

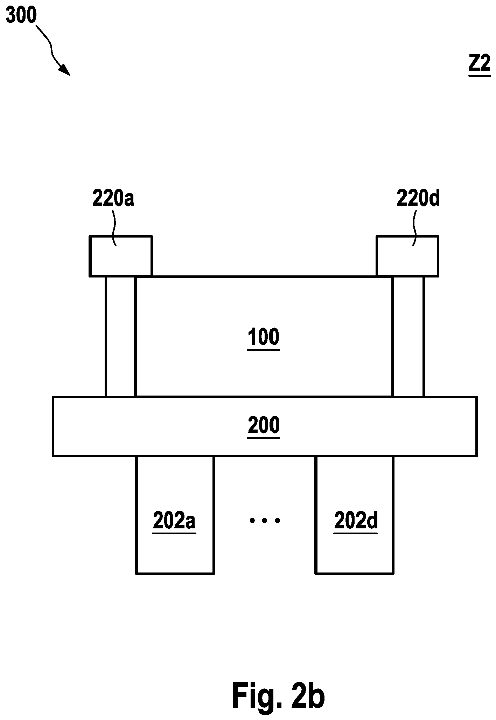

Figuren 2a und 2b zeigen in schematischer Schnittansicht eine Vorrichtung 300 zur Anordnung des Ventilblockkörpers 100 an dem Antriebsträger 200 in einem jeweiligen Zustand. An dem Antriebsträger 200 sind auf einer von dem Ventilblockkörper 100 abgewandten Seite eine Mehrzahl von Ventilantrieben 202a-d angeordnet, insbesondere starr befestigt.

In dem ersten in Figur 2a gezeigten Zustand Z1 geben eine Mehrzahl von sich an dem Antriebsträger 200 abstützenden, beweglichen Spannelementen 220a-d einen Montageraum M zur Anordnung des Ventilblockkörpers 100 an dem Antriebsträger 200 frei.

In dem zweiten in Figur 2b gezeigten Zustand Z2 greifen die Mehrzahl der Spannelemente 220a-d in die zugeordneten Spannabschnitte 120a-d des Ventilkörpers 100 ein und verspannen bzw. verklemmen den Ventilblockkörper 100 zwischen der Mehrzahl von Spannelementen 220a-d und dem Antriebsträger 200.

Die Spannelemente 220a-d werden über einen oder mehrere Spannantriebe in eine jeweilige Klemmposition gemäß dem zweiten Zustand überführt. Nach dem Beenden des Einsatzes des Ventilblockkörpers 100 wird die Vorrichtung 300 wieder in den Zustand Z1 gebracht und der Ventilkörper 100 kann ausgetauscht werden.

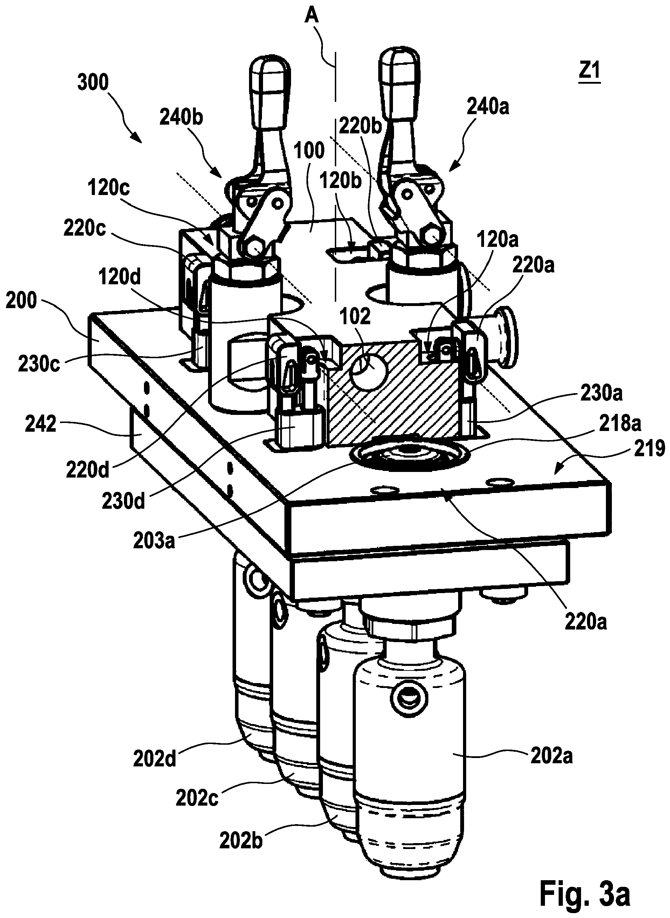

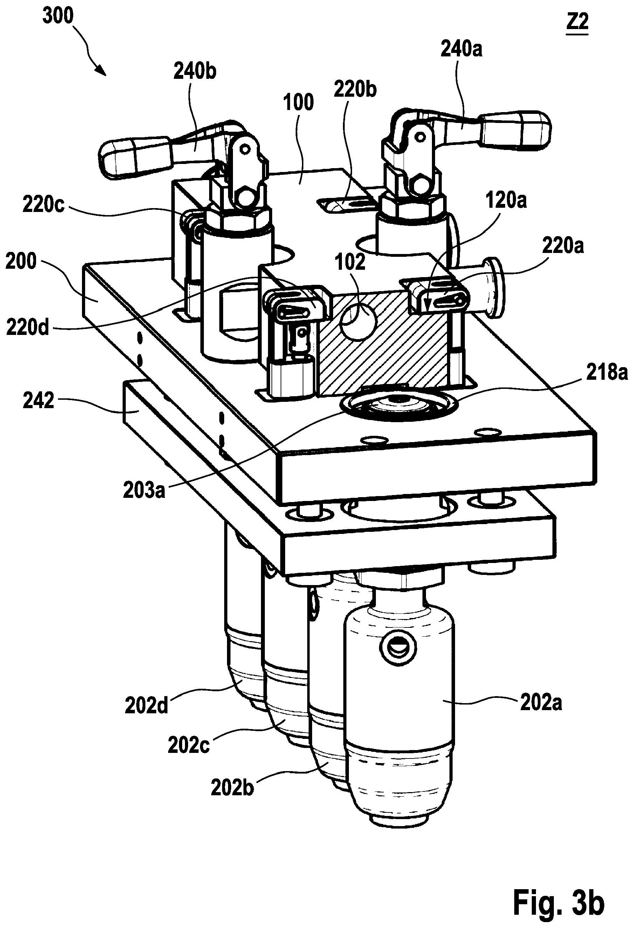

Figuren 3a und 3b zeigen in einer perspektivischen Ansicht die Vorrichtung in einem jeweiligen der Zustände Z1, Z2.Eine Mehrzahl von Formschlusselementen 230a-d ragen von dem Antriebsträger 200 ab. Die Formschlusselemente 230a-d begrenzen in dem ersten Zustand Z1 den Montageraum M aus Figur 2a für den Ventilblockkörper 100 zumindest abschnittsweise. Die Formschlusselemente 230a-d greifen in dem zweiten Zustand Z2 in die Formschlussabschnitte 130a-d des Ventilblockkörpers 100 ein und legen diesen damit zumindest in einer Ebene lotrecht zur Achse A fest. Die Mehrzahl von Formschlusselementen 230a-d bzw. deren Oberflächen verlaufen zumindest abschnittsweise parallel zu der Anordnungsachse A des Ventilblockkörpers 100, wobei die Formschlusselemente 230a-d in dem zweiten Zustand den Ventilblockkörper 100 lotrecht zur Anordnungsachse A formschlüssig festlegen.

In dem ersten Zustand Z1 gemäß den Figuren 2a, 3a und 4a befinden sich die Mehrzahl von Spannelementen 220a-d jeweils zumindest in einem dem Ventilkörper 100 zugewandten Bereich innerhalb einer gedachten, parallel zur Anordnungsachse A verlaufenden Verlängerung des zugeordneten Formschlusselements 230a-d. Beim Übergang in dem zweiten Zustand Z2 hingegen ragen die Spannelemente 220a-d aus der vorgenannten Verlängerung heraus.

Die manuellen Spannantriebe 240a-b dienen zur Bewegung der Spannelemente 220a-d, wobei der Spannantrieb 240a-b sich an dem Antriebsträger 200 abstützt. Die Spannelemente 220a-d sind über einen gemeinsamen Steuerträger 242 miteinander gekoppelt. Die manuellen Spannantriebe 240a-b werden von dem Monteur mit einer jeweiligen Handhabe um eine Achse gedreht, womit das Antriebsmoment in den Steuerträger 242 eingeleitet wird. Selbstverständlich können die manuellen Spannantriebe 240a-b auch durch einen oder mehrere elektrische oder pneumatische Antriebe ersetzt werden und an einer anderen Position angeordnet sein.

Der Antriebsträger 200 ist zwischen dem Steuerträger 242 auf der einen Seite des Antriebsträgers 200 und dem wenigstens einen Spannantrieb 240a-b sowie den Spannelementen 220a-d auf der anderen Seite des Antriebsträgers 200 angeordnet. Der Steuerträger 242 ist über Führungsabschnitte zu einer Bewegung entlang bzw. parallel zur Achse A an dem Antriebsträger 200 gelagert.

Der Antriebsträger 200 umfasst eine Mehrzahl von Koppelabschnitten 220a-d zur Kopplung mit den Antriebs-Anschlussabschnitten 110a-d. Der jeweilige Koppelabschnitte 220a-d umfasst hierzu eine Durchgangsöffnung zur Durchführung von Antriebskomponenten wie beispielsweise einem Druckstück 203a-d. Ein Dichtabschnitt 218a-d ist gegenüber einer umgebenen Oberfläche 219 des Antriebsträgers 200 erhaben, um eine Verklemmung bzw. Verspannung des Randbereichs der jeweiligen Membran 114a-a zwischen dem Ventilblockkörper 100 und dem Antriebsträger 200 in dem zweiten Zustand Z2 herzustellen.

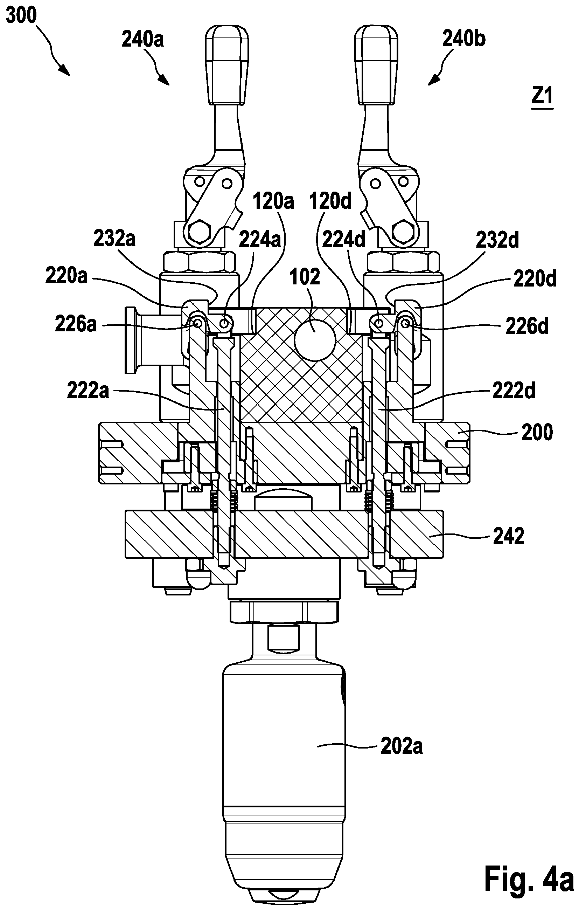

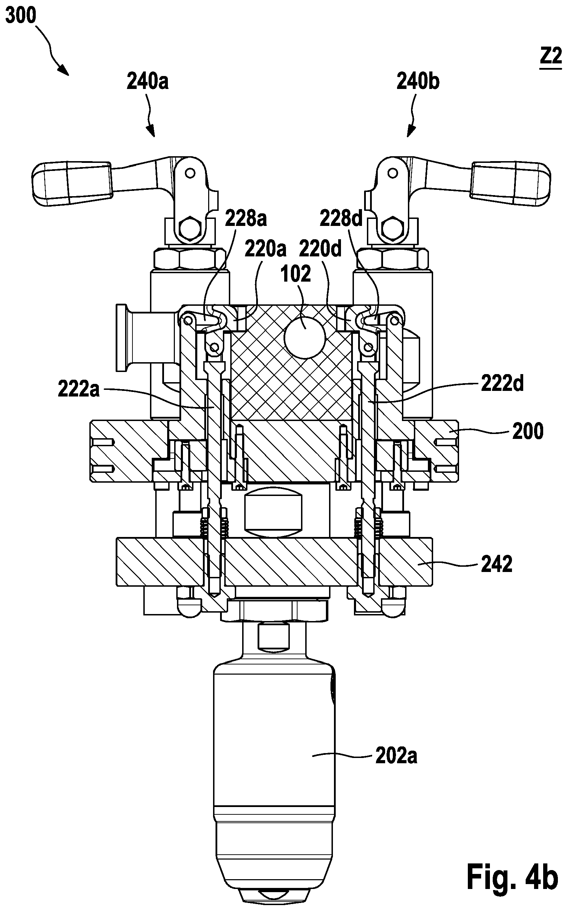

Figuren 4a und 4b zeigen in einer Schnittansicht die Vorrichtung 300 in einem jeweiligen der Zustände Z1 und Z2. Eine entlang ihrer Längsachse beweglich gelagerte Betätigungsstange 222a-d ist mit dem Steuerträger 242 starr verbunden. Über ein Drehgelenk 224a-d ist die Betätigungsstange 222a-d mit dem zugeordneten der Mehrzahl von Spannelementen 220a-d verbunden. Ein zu dem Antriebsträger 200 feststehend angeordnetes Element 226a-d ragt in ein Langloch 228a-d des zugeordneten Spannelements 220a-d hinein. Durch einen axialen Hub parallel zur Anordnungsachse A wird folglich das als Klammer ausgebildete Spannelement 220a-d umgelegt, da dieses in einer Kontur des Langlochs 228a-d zwangsgeführt ist und um eine exzentrische Lagerstelle gemäß dem zum Antriebsträger 200 feststehenden Element 226a-d kippt. Nach dem Kippen wird durch den restlichen axialen Hub der Betätigungsstange 222a-d eine Klemmkraft auf den Mehrventilblock 100 ausgeübt. Mit den Klammern wird eine Verbindung zwischen dem Antriebsträger 200 und dem Ventilblockkörper 100 hergestellt. Die eingebrachte Klemmkraft presst den Ventilblockkörper 100 auf den Antriebsträger 200 und presst hierdurch die Randbereiche der Membranen 114a-d des Ventilblockköpers 100 auf den zugeordneten Dichtring bzw. den zugeordneten Dichtabschnitt 218a-d des Antriebsträgers 200. Durch eine axiale Verschiebung des Steuerträgers 242 werden die Betätigungsstangen 222a-d der Klammern bzw. Spannelemente 220a-d axial bewegt. Der Steuerträger 242 kann entweder über die gezeigten Schubstangenspanner oder mit geeigneter Schieberkontur auch über einen pneumatischen oder elektrischen Spannantrieb 240a-b verfahren werden.

Das Langloch 228a-d verjüngt sich in Richtung eines Kontaktabschnitts 232a-d des zugeordneten Spannelements 220a-d. Der Kontaktabschnitt 232a-d ist zum Eingriff in den bzw. zur Kontaktierung des zugeordneten Spannabschnitts 120a-d des Ventilblockköpers 100 konfiguriert und ist vorliegend durch eine ebene Oberfläche ausgebildet. Andere Ausprägungen sind selbstverständlich denkbar. So ist eine Betätigung des zugeordneten Spannelements 220a-d mit einem zusätzlichen Kipphebel auch denkbar.

Zur Optimierung der Herstellkosten und Vereinfachung der Funktionalität können beispielsweise die Klammern im Sinne der Spannelemente 220a-d auch ohne Langloch und dafür die Fixierung gemäß dem feststehenden Elemente 226a-d mit einer flexiblen Stange ausgeführt sein.

Figur 5 zeigt die Vorrichtung 300 in einem Längsschnitt. Ein jeweiliger Adapter 206a-d ist starr mit einer beweglichen Ventilstange 204a-d verbunden und ist mittels des zugeordneten Ventilantriebs 204a-d entlang einer Stellachse Sa-d, die parallel zur Anordnungsachse A verläuft, bewegbar. Der Adapter 206a-d stellt in dem ersten Zustand Z1 einen Montageraum zur Montage des Koppelabschnitts 116a-d bereit. Nach Erreichen des Zustands Z2 wird der Montageraum geschlossen und der Koppelabschnitt 116a-d in einem Aufnahmeraum und damit zur Antriebsstange 116a-d festgelegt. Der Adapter 206a-d begrenzt den Stellweg der Membran entlang der Stellachse.

Ein Zwischenkörper 208a-d umfasst Steuerabschnitte 212a-d, welche innerhalb einer Durchgangsöffnung des Zwischenkörpers 208a-d feststehend angeordnet sind. Der wenigstens abschnittsweise innerhalb der Durchgangsöffnung beweglich angeordneten Adapter 206a-d ist mit zwei Adapterelementen ausgestattet, welche um eine lotrecht zu der Stellachse Sa-d verlaufende Rotationsachse drehbar zu dem Adapter 206a-d festgelegt sind. Ein Federelement spannt die zwei Adapterelemente derart vor, sodass die zur Stellachse weisenden Verbindungskonturen der Adapterelemente in der ersten Position des Adapters 206a-d entlang der Stellachse Sa-d den gemeinsamen Aufnahmeraum zur Aufnahme des Koppelabschnitts 116a-d Ventilmembran 114a-d begrenzen.

Ein Kontaktabschnitt des jeweiligen Adapterelements kontaktiert in einer ersten Position des Adapters 206a-d auf der Stellachse Sa-d, die in dem ersten Zustand Z1 eingenommen wird, den zugeordneten Steuerabschnitt 212a-d, und zwar derart, sodass das jeweilige Adapterelement um die Rotationsachse in eine Montageposition gedreht ist. In der Montageposition begrenzen die Verbindungskonturen der Adapterelemente einen Montageraum, der größer als ein Aufnahmeraum. Die der Stellachse Sa-d zugewandten Verbindungskonturen der Adapterelemente begrenzen in einer zweiten Position des Adapters 206a-d, der nach Erreichen des zweiten Zustands Z2 eingenommen wird, den gemeinsamen Aufnahmeraum zur Aufnahme und Festlegung des Koppelabschnitts 116a-d zur zugeordneten Ventilstange 204a-d.

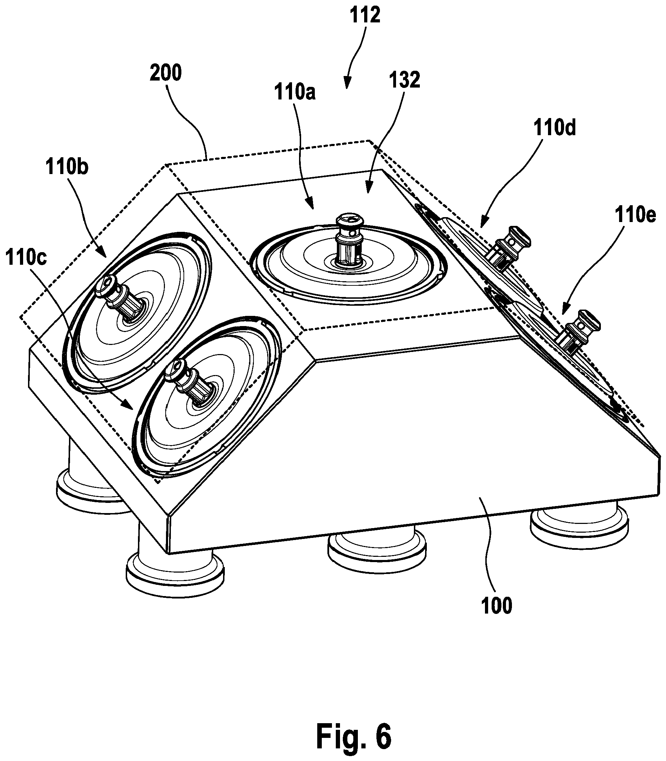

Figur 6 zeigt ein weiteres Beispiel für den Ventilblockkörper 100. Im Unterschied zu den vorigen Figuren umfasst der Ventilblockkörper 100 auf der einen Seite 112 Antriebs-Anschlussabschnitte 110a-e, die in unterschiedliche Richtungen orientiert sind. Es ergeben sich mehrere zueinander geneigte Oberflächen auf der einen Seite 112 des Ventilblockkörpers 100. Der gezeigte Ventilblockkörper 100 bietet Vorteile durch verkürzte Prozessfluidkanäle und die Anordnung der Fluidanschlüsse auf der den Antriebs-Anschlussabschnitten 110a-e gegenüberliegenden Seite. Der Antriebsträger 200 ist schematisch eingezeichnet und folgt der Oberflächengeometrie des Ventilblockkörpers 100.

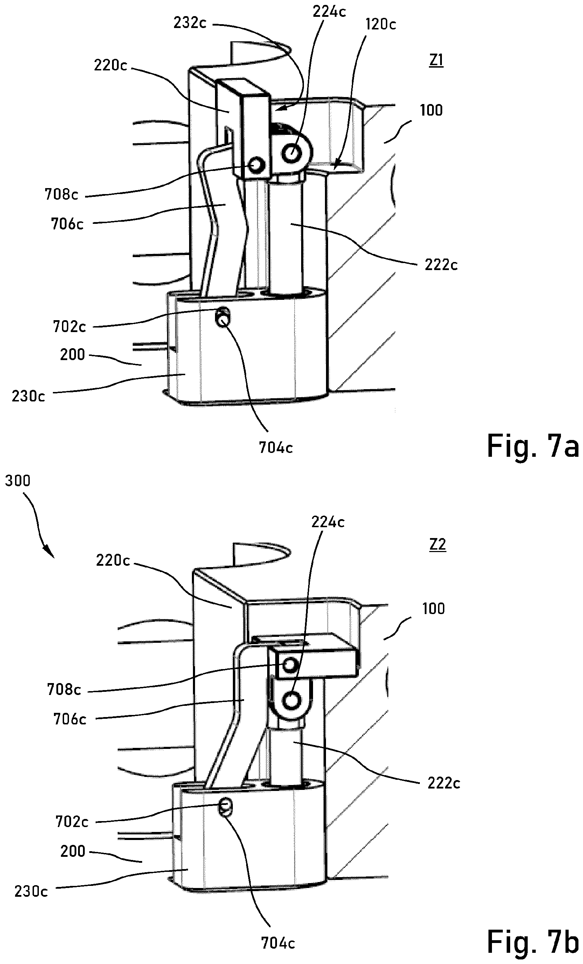

Figuren 7a und 7b zeigen in einer perspektivischen Detailansicht die Vorrichtung 300 in einem jeweiligen der Zustände Z1 und Z2. Am Beispiel des Spannelements 220c wird eine alternative Ausprägung beschrieben. Die weiteren Spannelemente sind analog zu dem Spannelement 220c ausgebildet. Die entlang ihrer Längsachse beweglich gelagerte Betätigungsstange 222c ist mit dem Steuerträger starr verbunden. Über das Drehgelenk 224c ist die Betätigungsstange 222c mit dem zugeordneten der Mehrzahl von Spannelementen 220c verbunden. Das Formschlusselement 230c ist feststehend zu dem Antriebsträger 200 angeordnet. In dem Formschlusselement 230c sind zwei sich parallel zur Stellachse erstreckende Langlöcher angeordnet, von denen das sichtbare mit dem Bezugszeichen 702c versehen ist. In die feststehenden Langlöcher greifen Vorsprünge einer Stange 706c ein, wobei der sichtbare Vorsprung mit dem Bezugszeichen 704c bezeichnet ist. Das Spannelement 220c ist mit der Stange 706c über ein weiteres Drehgelenk 708c verbunden. Durch einen axialen Hub parallel zur Anordnungsachse A wird folglich das als Klammer ausgebildete Spannelement 220c umgelegt, da dieses durch den Zug an dem Drehgelenk 224c bewegt wird und über die Drehgelenke 224c und 708c in Richtung der Fläche 120c kippt. Die Stange 706c stützt sich über die Vorsprünge an dem Antriebsträger 200 ab. Eine nach innen gewandte flache Kontur der Stange 706c liegt im zweiten Zustand Z2 an der Betätigungsstange 222c an. ssNach dem Kippen wird durch den restlichen axialen Hub der Betätigungsstange 222c die Klemmkraft auf den Mehrventilblock 100 ausgeübt. Mit den Klammern wird eine Verbindung zwischen dem Antriebsträger 200 und dem Ventilblockkörper 100 hergestellt. Die eingebrachte Klemmkraft presst den Ventilblockkörper 100 auf den Antriebsträger und presst hierdurch die Randbereiche der Membranen des Ventilblockköpers 100 auf den zugeordneten Dichtring bzw. den zugeordneten Dichtabschnitt des Antriebsträgers. Durch die axiale Verschiebung des Steuerträgers werden die Betätigungsstangen der Klammern bzw. Spannelemente 220a-d axial bewegt.

## Patentansprüche

1. Ein single-use Ventilblockkörper (100) zur Anordnung an einem Antriebsträger (200) umfassend:
eine Mehrzahl von Prozessfluidkanälen (102, 104a-d), zwischen denen Ventilsitze (106a-d) angeordnet sind;
eine Mehrzahl von den Ventilsitzen (106a-d) zugeordneten Antriebs-Anschlussabschnitten (110a-d), welche auf wenigstens einer Seite (112) des Ventilblockkörpers (100) angeordnet sind; und
eine Mehrzahl von Spannabschnitten (120a-d), die von der wenigstens einen Seite (112) des Ventilblockkörpers (100) abgewandt angeordnet sind.

2. Der Ventilblockkörper (100) gemäß dem Anspruch 1, umfassend eine Mehrzahl von parallel zu der Anordnungsachse (A) verlaufenden Formschlussabschnitten (130a-d).

3. Der Ventilblockkörper (100) gemäß Anspruch 2, wobei die Anordnungsachse (A) lotrecht zu wenigstens einer Oberfläche (132) auf der wenigstens einen Seite des Ventilblockkörpers (100), insbesondere lotrecht zu wenigstens einem der Antriebs-Anschlussabschnitte (110a-d), insbesondere lotrecht zu einer gedachten Ebene durch einen Rand wenigstens eines Antriebs-Anschlussabschnitts (110a-d), verläuft.

4. Der Ventilblockkörper (100) gemäß einem der vorigen Ansprüche, wobei wenigstens einer der Antriebs-Anschlussabschnitte (110a-d) eine Membran (114a-d) umfasst, die in ihrem lateralen Bereich zumindest abschnittsweise mit dem Ventilblockkörper (100) verbunden ist.

5. Der Ventilblockkörper (100) gemäß dem vorigen Anspruch, wobei wenigstens ein Koppelabschnitt (116a-d) von der Membran (114a-d), insbesondere parallel zur Anordnungsachse (A), abragt.

6. Der Ventilblockkörper (100) gemäß dem Anspruch 5, wobei der Koppelabschnitt (116a-d) derart eingerichtet ist, dass ein jeweiliger mit einer entlang einer Stellachse (Sa-d) beweglichen Ventilstange (204a-d) starr verbundener Adapter (206a-d) einer Mehrzahl von Ventilantrieben (204a-d) in dem ersten Zustand (Z1) einen Montageraum zur Anordnung des zugeordneten Koppelabschnitts (116a-d) der Membran (114a-d), freigibt, und dass der jeweilige Adapter (206a-d) nach Erreichen eines zweiten Zustands (Z2) den zugeordneten Koppelabschnitt (116a-d) zu einer zugeordneten Antriebsstange (204a-d) festlegt.

7. Der Ventilblockkörper (100) gemäß dem Anspruch 5 oder 6, wobei der jeweilige Koppelabschnitt (116a-d) ragt von der Membran 114a-d nach außen ab.

8. Der Ventilblockkörper (100) gemäß dem Anspruch 7, wobei der jeweilige Koppelabschnitt (116a-d) ein Membranpin ist.

9. Der Ventilblockkörper (100) gemäß einem der Ansprüche 5 bis 8, wobei der Koppelabschnitt (116a-d) parallel zur Anordnungsachse (A) von der Membran (114a-d) nach außen abragt, wobei die Anordnungsachse (A) lotrecht zu wenigstens einer Oberfläche (132) auf der wenigstens einen Seite des Ventilblockkörpers (100, insbesondere lotrecht zu wenigstens einem der Antriebs-Anschlussabschnitte (110a-d), insbesondere lotrecht zu einer gedachten Ebene durch einen Rand wenigstens eines Antriebs-Anschlussabschnitts (110a-d), verläuft.

10. Der Ventilblockkörper (100) gemäß einem der Ansprüche 4 bis 9, wobei die jeweilige Membran (114a-d) im lateralen Bereich mit dem Ventilblockkörper 100 verschweißt ist, und wobei die jeweilige Membran (114a-d) den jeweils zugeordneten Ventilsitz (106a-d) überdeckt.

11. Der Ventilblockkörper (100) gemäß dem Anspruch 10, wobei Randbereiche der Membranen (114a-d) des Ventilblockkörpers (100) derart eingerichtet sind, dass bei einer in den Ventilblockkörper (100) eingebrachten Klemmkraft diese den Ventilblockkörper (100) auf den Antriebsträger (200) presst und hierdurch die Randbereiche der Membranen (114a-d) des Ventilblockkörpers (100) auf einen zugeordneten Dichtring bzw. den zugeordneten Dichtabschnitt (218a-d) des Antriebsträgers (200) presst.

12. Der Ventilblockkörper (110) gemäß einem der vorigen Ansprüche, wobei der Ventilblockkörper (110) umfasst:
eine Mehrzahl von parallel zu einer Anordnungsachse (A) verlaufende Formschlussabschnitte (130a-d), welche als laterale Ausnehmungen ausgebildet sind.

13. Der Ventilblockkörper (110) gemäß einem der vorigen Ansprüche, wobei der Ventilblockkörper (110) umfasst:
eine Mehrzahl von parallel zu einer Anordnungsachse (A) verlaufende Formschlussabschnitte (130a-d), welche innerhalb des Ventilkörpers (110) angeordnet sind.

14. Der Ventilblockkörper (110) gemäß einem der vorigen Ansprüche, welche deart eingerichtet ist, dass eine Mehrzahl von Spannelementen (220a-d) eines Antriebsträgers (200) in die zugeordneten Spannabschnitte (120a-d) des Ventilkörpers (100) eingreift und damit den Ventilblockkörper (100) zwischen der Mehrzahl von Spannelementen (220a-d) und dem Antriebsträger (200) verspannt.

15. Der Ventilblockkörper (110) gemäß dem Anspruch 14, wobei die Formschlusselemente(230a-d) in die Formschlussabschnitte (130a-d) des Ventilblockkörpers (100) eingreifen und damit den Ventilblockkörper (110) zumindest in einer Ebene lotrecht zur Anordnungsachse (A) festlegen.

16. Eine Vorrichtung (300) zur Anordnung des Ventilblockkörpers (100) an dem Antriebsträger (200) umfassend:
den Ventilblockkörper (100) gemäß einem der vorigen Ansprüche; und
den Antriebsträger (200), an welchem eine Mehrzahl von Ventilantrieben (202a-d) angeordnet sind, wobei in einem ersten Zustand (Z1) eine Mehrzahl von sich an dem Antriebsträger (200) abstützenden, beweglichen Spannelementen (220a-d) einen Montageraum (M) zur Anordnung des Ventilblockkörpers (100) an dem Antriebsträger (200) freigeben, und wobei in einem zweiten Zustand (Z2) die Mehrzahl der Spannelemente (220a-d) die zugeordneten Spannabschnitte (120a-d) des Ventilkörpers (100) eingreifen und den Ventilblockkörper (100) zwischen der Mehrzahl von Spannelementen (220a-d) und dem Antriebsträger (200) verspannen.
